(19) Europäisches Patentamt

European Patent Office

Office européen des brevets

(11) EP 2 458 793 B1

(12) **EUROPEAN PATENT SPECIFICATION**

(45) Date of publication and mention
of the grant of the patent:
**25.09.2013 Bulletin 2013/39**

(21) Application number: **10306291.5**

(22) Date of filing: **24.11.2010**

(51) Int Cl.:
*H04L 12/46* (2006.01)        *H04L 12/721* (2013.01)
*H04L 12/781* (2013.01)        *H04L 12/741* (2013.01)
*H04L 12/751* (2013.01)

(54) **Method of exchanging routing information between network nodes in a packet switched network**

Verfahren zum Austauschen von Routinginformationen zwischen Netzknoten in einem Paketvermittlungsnetz

Procédé d'échange d'information d'acheminement entre noeuds de réseau dans un réseau commuté par paquets

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.05.2012 Bulletin 2012/22**

(73) Proprietor: **Alcatel Lucent
75007 Paris (FR)**

(72) Inventors:
• **Puricelli, Paolo
20867 Caponago (IT)**
• **Ciammarughi, Laura
20867 Caponago (IT)**

(74) Representative: **Mildner, Volker et al
Alcatel-Lucent
Intellectual Property & Standards
70430 Stuttgart (DE)**

(56) References cited:
**EP-A1- 2 175 593        EP-A2- 1 392 026**

• **CHRISTIAN P ET AL: "IS-IS Automatic Encapsulation; draft-ietf-isis-auto-encap-00.txt", IETF STANDARD-WORKING-DRAFT, INTERNET ENGINEERING TASK FORCE, IETF, CH, vol. isis, 1 July 2002 (2002-07-01), XP015021579, ISSN: 0000-0004**
• **PRZYGIENDA Z2 SAGL N SHEN CISCO SYSTEMS N SHETH JUNIPER NETWORKS T: "M-ISIS: Multi Topology (MT) Routing in Intermediate System to Intermediate Systems (IS-ISs); rfc5120.txt", IETF STANDARD, INTERNET ENGINEERING TASK FORCE, IETF, CH, 1 February 2008 (2008-02-01), XP015055189, ISSN: 0000-0003**

## Description

### Field of the invention

The invention relates to a method of exchanging routing information in a packet switched network.

### Background

In packet switched networks, it is known to distribute routing information among network nodes via link state messages according to the routing protocol called intermediate System-Intermediate System (IS-IS). A network node advertises itself to other network nodes of the network by distributing link state messages to the other network nodes. Within such a link state message, the network node is making public its own node address, a list of network nodes which are adjacent to the network node, and for each of the adjacent network nodes a respective metric of a respective link connecting the network node with the adjacent network node.

Furthermore, data pockets are exchanged between network nodes according to network protocols. A data packet, which is received by a network node, is forwarded by the network node to a further network node depending on the destination network node address of the data packet and depending on a routing table stored within the network node. Such a routing- table is generated by the network node via an algorithm called Shortest Path First based on the routing information received from other network nodes via the link state messages. The routing table indicates for a specific destination network node a next network node, to which the data packet shall be forwarded. This next node is determined by the Shortest Path First Algorithm, such that the data packet is transmitted from the source node to the destination node along a path having a minimized overall metric.

Network nodes support one or more network protocols for transmitting data pockets of one or more network protocols. A first network protocol is the Internet Protocol (IP protocol). Another network protocol is the Connectionless Network Protocol (CLNP protocol). A first and a second network node, each supporting two network protocols, may be connected by a path of intermediate network nodes, which support only one of the two network protocols. In order to transmit data packets of a first network protocol, which is not supported by the intermediate network nodes, from the first to the second network node, a so called tunnel path between the first network node and the second network node is provided. Such a tunnel path is provided, by encapsulating at the first network node data packets of the first network protocol into data packets of a second network protocol, which is supported by the intermediate network nodes. These data packet of the second network protocol are then transmitted from the first network node to the second network node along the path of the intermediate network nodes. The second network node then decapsulates the data packets of the first network protocol from the data pocket of the second network protocol, before forwarding the data packets of the first network protocol towards other network nodes of the network.

It is furthermore known, that network nodes may advertise themselves, by including into their link state messages a data element, which indicates the network protocols that they support. Other network nodes receiving such link state messages may then take this information into account, and build individual routing tables for individual network protocol. For a routing table of a specific network protocol, only nodes supporting that specific routing protocol are taken into account. By this, it is ensured that a network node building individual routing tables will not attempt to transmit a data packet along a path containing network nodes, which do not support the network protocol of that data packet.

The document EP 1392026 A2 discloses a method, in which a shortest-path-first routing algorithm is modified, such that it considers information identifying protocols that are supported by respective network nodes. The modified shortest-path-first routing algorithm generates a path database, in which additional fields pay respect to encapsulation costs when encapsulating data packets of one protocol into data packets of another protocol on the respective data path. The tunnelling encapsulation costs are provided in the additional field.

The document EP 1275593 A1 discloses a method for routing data packets in a network, wherein pseudo-nodes are used for modifying the structure of the network.

### Summary

The invention aims at improving a distribution of routing information in a packet switched network.

Proposed is a method of exchanging routing information between network nodes in a packet switched network. The network nodes send to other network nodes link state messages indicating

- themselves
- network nodes adjacent to themselves, and
- metrics of respective links connecting themselves to their respective adjacent network nodes.

A first and a second network node each support at least a first, IP, and a second, CLNP, network protocol. The first and the second network node are connected by a path containing intermediate network nodes, which do not support the first network protocol.

A tunnel path between the first network node and the second network node is provided, by encapsulating a the first network node data packets of the first network protocol, IP, into data packets of the second network protocol, CLNP.

The tunnel path is advertised, by sending a link state message indicating a pseudo network node. The pseudo network node is indicated in the link state message as a network node located between the first and the second network node. Furthermore, the pseudo network node is indicated in the link state message as a network node supporting the first ,IP, but not the second, CLNP, network protocol. A metric indicated in the link state message is chosen such, that an overall metric of said tunnel path is equal to or greater than an overall metric of the path containing the intermediate network nodes.

The achievements of the proposed method are threefold.

Firstly, by advertising the pseudo network node as a network node located between the first and the second network node, the tunnel path for transmitting data pockets between these nodes is advertised to other network nodes of the network. Other network nodes receiving the link state message will take the pseudo node into account for generating their routing tables. Therefore, the network nodes will take into consideration the tunnel path for transmission of data packets. Without the pseudo node being advertised, the tunnel path between the first and the second network node would not become public to the other network nodes of the network.

Secondly, by indicating in the link state message that the pseudo node supports the first but not the second network protocol, it is indicated to the other network nodes, that the tunnel path formed by the pseudo node should be taken into consideration for transmission of data packets of the first but not the second network protocol, Network nodes exploiting the information of the supported network protocols of link state messages are then able to build one routing table for the first network protocol taking into account the pseudo node forming the tunnel path. Furthermore, these network nodes are able to build another routing table for the second network protocol, not taking into account the pseudo node forming the tunnel path. Thus, these network nodes will consider the tunnel path only for transmitting data packet of the first but not of the second network protocol. By this, it is avoided that on attempt of transmitting data packets of the second network protocol along the tunnel path is made, thus avoiding a loss of these data packets.

Thirdly, it may be the case that some network nodes do not build individual routing tables for individual network protocols, even if such information is provided within link state messages. If a network node supports only the second but not the first network protocol, this node may try to transmit a data packet of the second network protocol along the tunnel path, although the pseudo node has been advertised as a node supporting only the first network protocol. This would result in a loss of the data packet of the second network protocol. By setting the metric of a link connecting the pseudo node to a next node, such that the overall metric of the tunnel path is equal to or greater than the overall metric of the path formed by the intermediate network nodes, the following is achieved: the network node supporting only the second network protocol will not consider the tunnel path for transmitting the data packet of the second network protocol; instead, the network nodes supporting only the second network protocol will consider the path formed by the intermediate network nodes for transmitting the data packet of the second network protocol, Thus, a loss of the data packet of the second network protocol is avoided even in the case, that the network node does not build individual routing tables for individual network protocols.

**Brief description of the drawings**

Figure 1 shows network nodes of a network.

Figure 2 shows the network with an additional pseudo network node,

Figure 3 shows the network with even a further additional pseudo network node.

Figure 4 shows multiple network nodes connected by a same pseudo network node.

Figure 5 shows a hardware structure of a network node,

Figure 6 shows first protocols carried out at the network node.

Figure 7 shows second protocols carried out at the network node.

## Description of embodiments

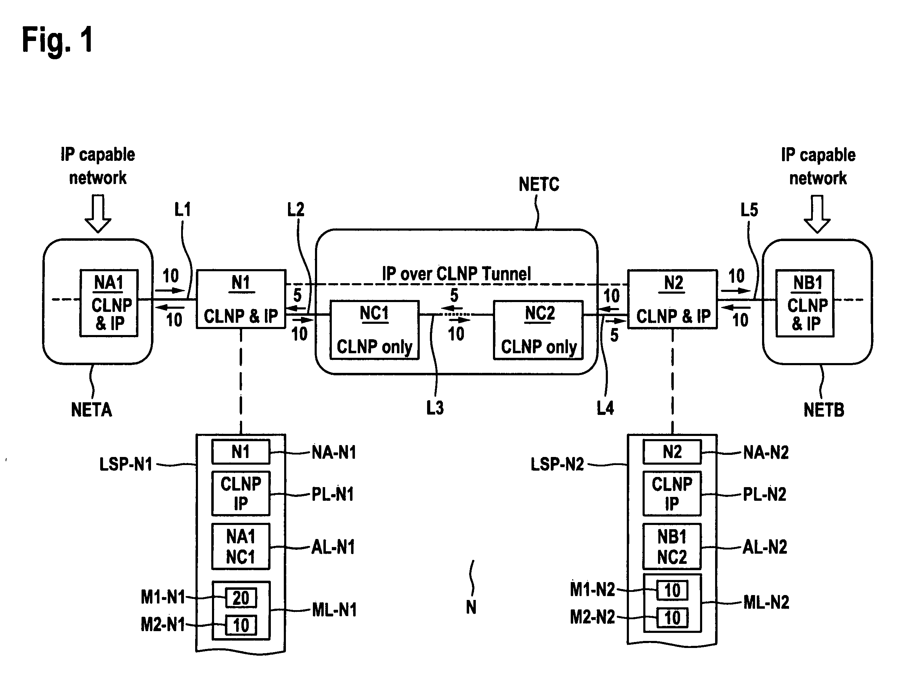

Figure 1 shows a network N. The nodes of the network N exchange routing information according to the IS-IS routing protocol. The network protocols supported by nodes of the network N are the CLNP protocol and/or the IP protocol. The IS-IS routing protocol is defined in the standard "ISO/IEC, FDIS 10589: 2001 (E), Information technology-Telecommunications and information exchange between systems - Intermediate System to Intermediate System infra-domain routing information exchange protocol for use in conjunction with the protocol for providing the connectionless-mode network service (ISO 8473)", briefly called ISO 10589. The IS-IS routing protocol as defined in ISO 1 0589 has been designed for use in conjunction with the network protocol CLNP. The IS-IS routing protocol has been extended for use in conjunction with the IP protocol in the paper "Network Working Group - Request for Comments: 1995, Ross W. Callon, Digital Equipment Corporation, December 1990, Use of OSI IS-IS for Routing in TCP/IP and Dual Environments", briefly called RFC 1195. According to the document RFC 1195, a network node induces into its link state messages a data element indicating the network protocols that it supports. The CLNP protocol is specified in the document "Information technology - Protocol for providing the connectionless-mode network service: Protocol specification ISO/IEC 8473-1, 1998", briefly called ISO 8473. The IP protocol is specified in the document "RFC 791; Internet Protocol, Darpa Internet Program, Protocol Specification; Information Sciences Institute, University of Southern California, 4676 Admiralty Way, Marina del Rey, California 90291; September 1981", briefly called RFC 791.

Two network nodes N1, N2 both support the CLNP and the IP protocol. These nodes are connected via a partial network NETC, which contains intermediate network nodes NC1, NC2. The nodes NC1, NC2 support only the CLNP protocol. The node N1 is connected to the node NC1 via a link L2, while the node N2 is connected to the node NC2 via a link L4. The nodes NC1 and NC2 within the network NETC are connected, possibly via a link L3 or via further intermediate network nodes. The intermediate nodes NC1, NC2 form a path connecting the nodes N1, N2.

The network node N1 is furthermore connected via a link L1 to a node NA1, which is located within a partial network NETA. The node NA1 supports the IP protocol and the CLNP protocol. The node N2 is furthermore connected via a link L5 to a network node NB1 of a partial network NETB. The node NB1 supports the lop protocol and the CLNP protocol.

At the node N1, a tunnel path for transmitting IP data packets from the node N1 to the node N2 via the partial network NETC is provided. The node N1 encapsulates IP data packets into CLNP data packets for transmitting them along the path of the intermediate nodes NC1, NC2 through the partial network NETC to the node N2. The node N2 decapsulates the IP data packets from the CLNP data packets, before forwarding the IP data packets to the partial network NETB. In the opposite direction, from the node N2 to the node N1, the node N2 provides a tunnel path for transmitting IP data packets from the node N2 to the node N1. The method of a tunnel path encapsulation of data packets has been described in the document "Request For Comments 3147, Generic Routing Encapsulation over CLNS Networks, July 2001", briefly called RFC 3147.

The nodes of the network N exchange routing information according to the routing protocol IS-IS. The nodes send link state messages as multicast messages to other nodes of the network.

The node N1 advertises itself, by sending to the other network nodes a link state message LSP-N1 in accordance with the standard RFC 1195. The link state message LSP-N1 contains as a node address NA-N1 the node address of the node N1 itself, a protocol list PL-N1 that indicates the CLNP and the IP network protocol, and an adjacency list AL-N1 that indicates as the adjacent nodes the nodes NA1 and NC1. Furthermore, the link state message LSP-N1 contains for each adjacent network node NA1, NC1 a corresponding metric M1-N1, M2~N1 indicating a transmission cost for transmitting a data packet via a corresponding link L1 L2 from the network node N1 to the corresponding adjacent node NA1, NC1.

The node N2 advertises itself, by sending to the other nodes a link state message LSP-N2 in accordance with the document RFC 1195. This message LSP-N2 contains as a node address NA-N2 the node address of the node N2, a protocol list PL-N2 indicating the CLNP protocol and the IP network protocol, and an adjacency list AL-N2 indicating as adjacent neighbors the nodes NB1 and NC2. Furthermore, the link state message LSP-N2 contains for each adjacent network node NB1, NC2 a corresponding metric M1-N2, M2-N2, indicating a transmission cost for transmitting a data packet via a corresponding link L5, L4 from the network node N2 to an adjacent node NB1, NC2.

The nodes NA1, NB1 advertise themselves by link state messages according to the document RFC 1195, corresponding to the link state messages of the node N1, N2.

The nodes NC1,NC2 advertise themselves by link state messages according to the document ISO 10589. This implied, that the nodes NC1, NC2 do not include into their link state messages information regarding the network protocols supported by them. Alternatively, this implies, that the nodes NC1, NC2 act in accordance with the standard RFC 1195, such that they include into their link state messages a data element indicating the CLNP protocol but not the IP protocol.

For the link L1, the cost metric for data packet transmission in the direction from the node N1 to the node NA1 is chosen by the node N1 to the value 20, The cost metric of the link L1 for transmission in the opposite direction is chosen by the node NA1 to the value 10. For the further links L2, ... , L5, the corresponding cost metrics for separate transmission directions, as chosen by the corresponding network nodes, con be found in the Figure 1.

The nodes N1, N2, NA1, NB1 use information of received link state messages for building a routing table for the CLNP network protocol. For building this routing table, the node N1 uses the Shortest Path First algorithm as proposed in the previously filed European patent application EP2175692. Since the link state messages of the node NC1 do no not contain any information on network protocol supported by the node NC1, the nodes N1, N2, NA1 NB1 assume that the node NC1 supports only the CLNP protocol. Therefore, the nodes N1, N2, NA1, NB1 take the node NC1 into account for building the routing tables of the CLNP protocol. Even furthermore, the nodes N1, N2, NA1, NB1 do not take into account the node NC1 for building their routing tables for the IP protocol.

The nodes NC1, NC2 do not support the method of building individual routing tables for individual network protocols. Therefore, the nodes NC1, NC2 build one single routing table for any network protocol. In this example, the node NC1, NC2 build a single routing table, specifically for CLNP data packet, also taking into account network nodes that support only the IP protocol.

Since the link state messages LSP-N1, LSP-N2 of the nodes N1, N2 do not declare a direct connection between the nodes N1, N2, the IP funnel between the nodes N1 and N2 is not yet advertised to the other nodes of the network N. Thus, although the IP tunnel for forwarding IP data packets from the node N1 to the node N2 is available, this IP tunnel connection will not yet be considered by other network nodes for a transmission of IP data packets,

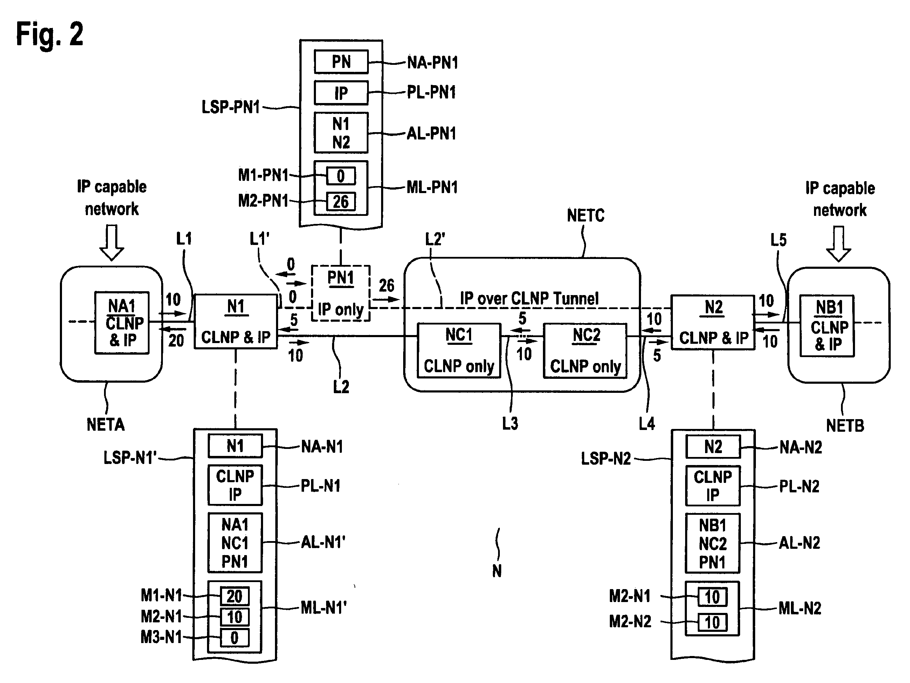

Figure 2 shows all network elements of the network N as Figure 1, as well as a pseudo network node PN1 located between the node N1 and the node N2. Furthermore, Figure 2 shows a modified link state message LSP-N1' of the node N1 and a link state message LSP-PN 1 of the pseudo node PN1.

For advertising the tunnel path, the node N1 generates the pseudo node PN1, by generating the link state message LSP-PN1 and sending this message as a multicast message to other nodes of the network N. The link state messages LSP-PN1 contains as a network address NA-PN1 the node address PN of the pseudo node PN1.

The pseudo node PN1 is advertised as a node located between the nodes N1 and N2 providing the tunnel path. The pseudo node PN1 is advertised as a node connected to the nodes N1 and N2, by including within the link state message LSP-PN1 the nodes N1, N2 into the list AL-PN1 of adjacent nodes, Other network nodes receiving the link state message LSP-PN1 will discover that the pseudo network node PN1 connects the node N1 with the node N2. Therefore, the tunnel path will be considered also by other network nodes for a transmission of IP data pockets.

The pseudo node PN1 is advertised as a node supporting the IP protocol but not the CLNP protocol, This is done, by including into the message LSP-PN the data element PL-PN1 indicating the IP protocol but not the CLNP protocol, Other network nodes supporting the method of building individual routing tables will analyze the network protocols indicated in the message LSP-PN1 and take this information into account for building their individual routing tables. These other network nodes will build individual routing tables for the IP protocol taking into account the pseudo node PN1, thus considering the funnel path for transmitting IP data packets. These other network nodes will build individual routing tables for the CLNP protocol, not taking into account the pseudo node PN1, thus not considering the funnel path for transmitting CLNP data packets. Therefore, these network nodes will ensure, that no attempt will be made to transmit CLNP data packets along the tunnel path, which would result in a loss of these CLNP data packets.

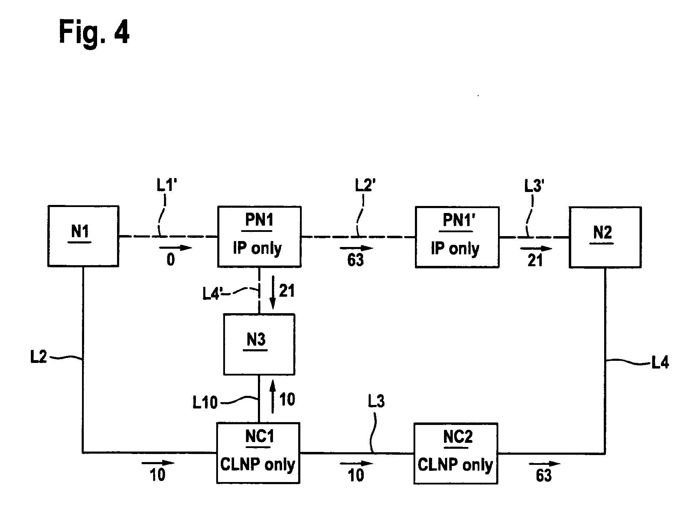

The generation of the pseudo node PN1 includes a generation of two new links L1', L2' connecting the pseudo node PN1 with its adjacent neighboring nodes N1, N2. The node N1 determines the overall metric of the path connecting the node N1 with the node N2 along the intermediate nodes NC1, NC2. Such determination is carried out by the Shortest Path Algorithm generating the routing table for the CLNP protocol. This overall metric is in the given example equal to the sum of the metrics of the links L2, L3 and L4 in the transmission direction from the node N1 to the node N2. This sum is in this example equal to the value 25. The node N1 chooses the metric M2-PN1 of the link L2' such, that the overall metric of the tunnel path is equal to or greater than the overall metric of the path of the intermediate nodes NC1, NC2. In this example, the node N1 chooses the metric M2-PN1 to the value 26. The metric M1 -PN1 is chosen to the value 0, which will be described in detail with respect to Figure 4 later on.

The achievement of choosing the metric M2-PN1 as described above is now described in detail. As previously mentioned, the node NC1 does not support the method of building individual routing tables. The node NC1 builds one single routing table without considering the data element PL-PN1 indicating that the pseudo node PN1 supports the IP protocol but not the CLNP protocol, Thus, the node NC1 will take the pseudo node PN1 into consideration when building the routing table via the Shortest Path First algorithm. Therefore, there is a risk that the node NC1 considers the tunnel path for forwarding and transmitting CLNP data packets, which would result in a loss of these CLNP data pockets.

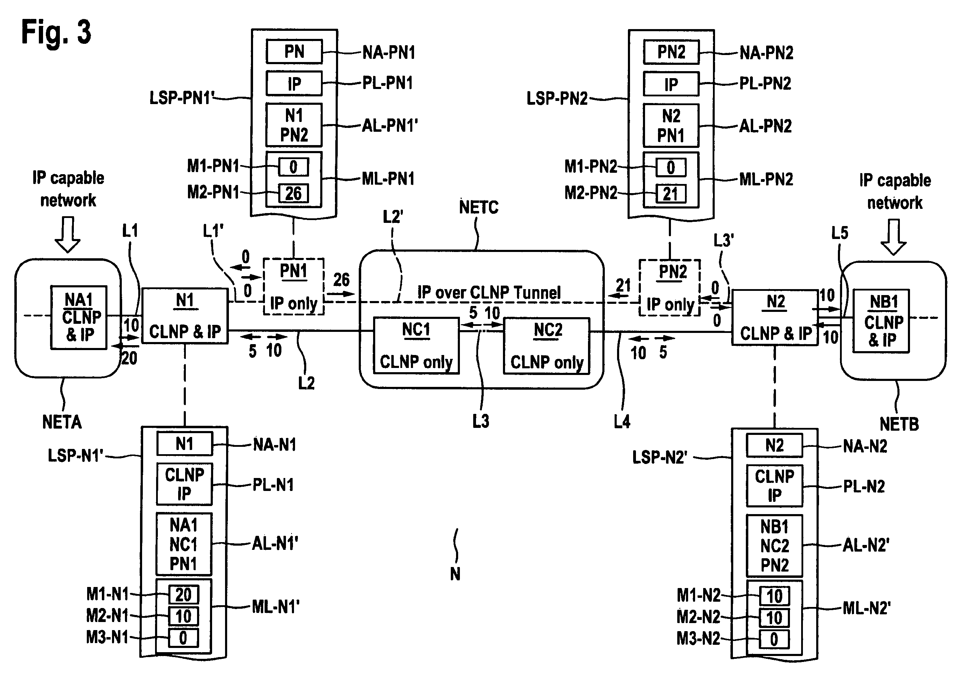

In the given example of Figure 3, the metric M2-PN1 is chosen fo the value 26, such that the overall metric of the tunnel path is also equal to 26, which is greater than the overall metric, with the value 25, of the path of intermediate nodes NC1, NC2 between the nodes N1 and N2. Thus, the node NC1 will for sure consider to send a CLNP data packet along the node NC2 to the node N2 when using the Shortest Path Algorithm for choosing the path with the smallest overall metric.

Furthermore, the node NC1 will also consider to send a CLNP data packet along the node NC2 to the node N2, in the case that the metric M2- PN1 is chosen to the value 25, such that the overall metric of the tunnel path is equal the overall metric of the path of intermediate nodes NC1, NC2 between the nodes N1 and N2. This is due to the fact, that for a transmission of a CLNP data packet from the node NC1 to the node N1 along the link L2, a transmission cost of the link L2 adds to the overall metric of the tunnel. In this example, this is a sum of metrics of the links L2, L1', L2', L3' along a transmission via the nodes NC1, N1, PN1, PN2, N2, wherein this sum would be equal to the value 5+25=30. Since between real nodes NC1, N1 a metric of a link L2 connecting these real nodes is always chosen to a value greater than zero, this link L2 will contribute to the overall sum of metrics along the path NC1, N1, PN1, PN2, N2, which is the reason, why choosing the metric M2- PN1 such that the overall metric of the tunnel path is equal the overall metrics of the path of intermediate nodes NC1, NC2, forces the node NC1 not to consider the tunnel path for a transmission of any type of data packet.

The same considerations as for the node NC1 hold for other network nodes NC2 of the partial network NETC, which do not support the method of building individual routing tables. In order to avoid, that CLNP data packets get lost during an attempt to transmit them along the tunnel path, these nodes have to be forced to consider the path of intermediate nodes NC1, NC2 between the nodes N1, N2 instead of the tunnel path. Therefore, by choosing the metrics M3-N1, M2-PN1, such that the overall metric of the tunnel path is equal to or greater than the overall metric of the path of intermediate nodes NC1, NC2 between the nodes N1, N2, nodes, such as the node NC2, not supporting the method of individual routing tables, will not attempt to transmit CLNP data packets along the IP tunnel path. This is due to the Shortest Path Algorithm always choosing the path with the smallest overall metric.

The node N1 advertises itself by a modified link state message LSP-N1', containing a modified list of adjacent nodes AL-N1' indicating the nodes NA1, NC1 and the pseudo node PN1. By this, the node N1 advertises the adjacency between itself and the pseudo node PN1.

The node N1 includes into the modified list of link metrics ML-N1' the metric M3-N1 indicating the transmission costs from the node N1 to the pseudo node PN1 along the link L1'. This metric M3-N1 is chosen to the value 0. The metrics of the links L1', L2' in the transmission direction from the node N1 to the node N2 are chosen such, that the overall metric of the tunnel path along the links L1' and L2' is equal to or greater than the overall metric of the path of intermediate nodes NC1, NC2 in the same transmission direction. The choice of the value 0 for the metric M3-N1 will be explained in detail with respect to Figure 4 later on.

The node N1 includes, on behalf of pseudo node PN1, into the list of link metrics ML-PN1 the metric M1 -PN1 corresponding to the transmission costs from the pseudo node PN1 to the node N1 along the link L1'. This metric M1-PN1 is chosen to the value 0. By setting the M1 - PN1 to the value 0, the node N1 refrains from affecting the overall metric of the tunnel path in the transmission direction from the node N2 to the node N1. By doing so, the node N1 enables the node N2 to be fully in charge of setting the overall metric of the tunnel path along the transmission direction from the node N2 to the node N1. This will be described in detail with respect to Figure 3 further bellow.

Figure 3 shows all network elements of the network N as Figure 2, as well as a further pseudo network node PN2 located between the node N1 and the node N2. Furthermore, Figure 3 shows a modified link stale message LSP-N2' of the node N2, a modified link state message LSP-PN1' of the pseudo node PN1 and a link state message LSP-PN2 of the pseudo node PN2.

The node N2 provides a transmission of IP data packets via the tunnel path in the transmission direction from the node N2 to the node N1 by means of data packet encapsulation as previously described.

The nodes N1, N2 exchange handshake messages for discovering pseudo nodes as their adjacent neighboring nodes as described in the previously filed but not yet published European patent application "Automatic adjacency creation with Pseudo-Nodes on point-to-point links" of the applicant with the European patent application EP2337275 . Thanks to the handshake message exchange, the node N2 discovers the pseudo node PN1 as its adjacent neighbor, before generating the pseudo node PN2. Thanks to the same handshake message exchange, the node N1 discovers the pseudo node PN2 as its adjacent neighbor, before generating the pseudo node PN1.

The node N2 includes in its modified link state message LSP-N2' the pseudo node PN2 as an adjacent node within the list AL-N2'.

The node N2 generates and distributes link state messages LSP-PN2 on behalf of the pseudo node PN2. The message LSP-PN2 contains as node address NA-PN2 the node address of the pseudo node PN2. Furthermore, the message LSP-PN2 indicates within the list PL-PN2 the IP protocol, and within the list AL-PN2 of adjacent nodes the nodes N2, PN 1.

After discovering the pseudo node PN2, the node N1 replaces within the adjacency list AL-PN1' of the message LSP-PN1' the node N2 by the pseudo node PN2.

The creation of the pseudo node PN2 generates a new link L3' connecting the pseudo node PN2 and the node N2.

The metric M2-PN2 contained in the list ML-PN2 of the message LSP-PN2 indicates the transmission costs from the pseudo node PN2 to the pseudo node  PN1 along the link L2'. The metric M1 -PN2 contained in the list ML-PN2 of the message LSP-PN2 indicates the transmission costs from the pseudo node PN2 to the node N2 along the link L3'.

The node N2 determines the overall metric for transmitting CLNP data packets along the path formed by the intermediate nodes NC2, NC1 in the transmission direction from the node N2 to the node N1. The node does so, by running the Shortest Path Algorithm for building a CLNP routing table. According to the given example, this overall metric is the sum of the metrics of the links L4, L3, L2 with an overall metric value of 20. The node N2 chooses the metric M2-PN2 such, that the overall metric of the tunnel path in the transmission direction from the node N2 to the node N1 is equal to or greater than the overall metric of the path of intermediate nodes NC2, NC1 in the transmission direction from the node N2 to the node N1. In this example, the node N2 chooses the metric M2-PN2 to the value 21. Therefore, network nodes not building individual routing tables will not consider the tunnel path for transmission of CLNP data packets from the node N2 to the node N1, thus avoiding a loss of these CLNP data packets.

The node N2 chooses within the message LSP-PN2 the metric M1-PN2 indicating the transmission costs of the link L3' for transmission from the node PN2 to the node N2 to the value 0. By doing so, the node N2 refrains from affecting the overall metric of the tunnel path in the transmission direction from the node N1 to the node N2. The achievement of this is, that the node N1 is able to have full control of the overall metric of the tunnel path in the transmission direction from the node N1 to the node N2. Therefore, the proposed method running at the node N1 for adjusting the overall metric of the tunnel path for transmission from the node N1 to the node N2, and the proposed method running at the node N2 for adjusting the overall metric of the tunnel path for transmission from the node N2 to the node N1 can run independently from one another, without having to be synchronized. Each respective node N1, N2 providing a tunnel path via data packet encapsulation to another node N2, N1 is able to control on its own the overall metric of the tunnel path in the respective transmission direction. Thus, each respective node N1, N2 can ensure, that the overall metric of the provided tunnel path in the respective transmission direction is equal to or greater than an overall metric of another path of intermediate nodes NC1, NC2 connecting the respective node N1, N2 with the other node N2, N1.

The node N2 includes into the modified list of link metrics ML-N2' the metric M3-N2 corresponding to the transmission costs from the node N2 to the pseudo node PN2 along the link L3'. This metric M3-N2 is chosen to the value 0. This choice will be explained in detail with respect to Figure 4 later on.

Link state message as proposed in the documents ISO 10589 or RFC 1195 contain a data field indicating the lifetime of a link state message. Once a node has received a link state message from another node, it takes the network node advertised by the link state message only into account, if the indicated lifetime of that message is greater then zero. If this is the case, then the advertised network node is considered for building one or more routing tables. A counter provided by the node determines the time that has elapsed since a link state message has been received. In the case, that the elapsed time is greater than the lifetime of the link state message, and in the case that no updated link state message from that other node has been received meanwhile, then the node assumes that the initially advertised other node is not present in the network any more. Therefore, the node re-runs the Shortest Path Algorithm for building a routing table without taking into account the previously advertised other network node.

In the case, that the node receives during a lifetime cycle of a link state message a new link state message advertising the same other node but indicating a lifetime of zero, then the node re-runs the Shortest Path Algorithm for building a routing table without taking into account the previously advertised other node.

Even furthermore, in the case that the node receives during a lifetime of a link state message a new link state message advertising the same other node, but indicating modified adjacent nodes and/or modified link metrics, then the node re-runs the Shortest Path Algorithm for building a routing table, taking into account the previously advertised network node with the newly indicated modified information.

To summarize the above, there are multiple occasions, on which an indicated change of the network topology triggers a re-run of the Shortest Path Algorithm for building a routing table at the network node. Thus, a node is able to monitor a path of nodes, by monitoring the lifetimes of previously received link state messages, comparing the information indicated by newly received link state messages with the information of the previously received link state messages. Using the result from monitoring the lifetimes and from the comparison of link state messages, the node is able to detect a change of the path. Thus, the node is furthermore able to detect a change of the overall metric of the path, by running the Shortest Path First Algorithm for updating a routing table.

In the example shown in Figure 3, the node N1 keeps its routing tables updated in the way described above. Once the node N1 re-runs the Shortest Path Algorithm for updating its CLNP routing table, then this node N1 newly determines the overall metric of the path of intermediate nodes NC1, NC2 in the transmission direction from the node N1 to the node N2. Using this newly determined overall metric, the node N1 chooses the metric M2-PN1 such, that the overall metric of the tunnel path in the transmission direction from the node N1 to the node N2 is equal to or greater than the overall metric of the path of intermediate node NC1, NC2 in the transmission direction from the node N1 to the node N2. In other words, the node N1 adjusts the metric M2-PN1 for adjusting the overall metric M3-N1 +M2-PN1 of the tunnel path, such that it is equal to or greater than a changed overall metric of the path of intermediate nodes. By doing so, the node N1 takes a change of the network topology of the network N into account for ensuring that no network nodes will attempt to transmit CLNP data packets along the tunnel path.

So, in the case that the node N1, performing a calculation of a routing table for CLNP data packets via the Shortest Path First algorithm, discovers that the overall metric of the path of intermediate nodes NC1, NC2 leading to the node N2 is changed, then the node N1 consequently changes the link metrics connecting the pseudo node PN1, transmits new link state messages on behalf of the pseudo node PN1 with the new link metric and also recalculates its routing table for IP data packets via the Shortest Path First Algorithm. The new link state messages of the pseudo node PN1 will cause other nodes receiving, these new link state messages to recalculate their routing tables via the Shortest Path First algorithm.

According to the document ISO 10589 or RFC 1195, a link state message contains a data field for indicating a link metric, wherein this data field is of the size of six bits. This allows to choose the maximum value of a link metric to the value of 63. It may be the case, that the overall metric of the path of intermediate nodes NC1, NC2 connecting the node N1 with the node N2 is greater than the value of 63. In this case, the node N1 generates not only one pseudo node PN1, but a sequence of pseudo nodes as adjacent nodes. This sequence of pseudo nodes is generated such, that it is located between the node N1 and the node N2. This sequence of pseudo nodes connects the node N1 with the node N2. The node N1 chooses the metrics of the links connecting the generated pseudo nodes such, that the overall metric of the tunnel path formed by the sequence of pseudo nodes in the transmission direction from the node N1 to the node N2 is equal to or greater than the overall metric of the path of intermediate nodes NC1, NC2 in the transmission direction from the node N1 to the node N2. Such a use of multiple pseudo nodes for extending a link metric beyond the value of 63 is described in the previously filed but yet unpublished patent application of the applicant under the European Patent Application EP2337275 .

Furthermore, the node N2 generates and advertises a sequence pseudo nodes, in the case that the overall metric of the path of intermediate nodes NC2, NC1 in the transmission direction from the node N2 to the node N1 is greater than the value of 63. The node N2 does so, by taking measures corresponding to the measures taken by the node N1 for generating a sequence of pseudo nodes, as described above.

For each pseudo node of a sequence of pseudo nodes advertised by the network node N1, it is necessary that this network node N1 distributes separate link state messages on behalf of each of the advertised pseudo nodes. Thus, each additional pseudo node increases the amount of message signaling taking place within the network N. For setting the overall metric of the tunnel path by means of advertising multiple pseudo nodes, the node N1 sets for each advertised pseudo node a link metric of a link connecting the advertised pseudo node with a next node. The lost pseudo node of a sequence of pseudo nodes is advertised as being connected via a link to the node N2, which terminates the tunnel path. The metric of this link can be set to o value within the range from 1 up to a maximum metric value of 63, as previously described above.

The number of generated and advertised pseudo nodes is chosen by the node N1 to the minimum number of pseudo nodes necessary for setting the overall metric of the tunnel path equal to or greater than the overall metric of the path of intermediate nodes NC1, NC2. For a given overall metric OMP of the path of intermediate nodes and a given maximum metric value VMAX of a link connecting a pseudo node with a next node in the transmission direction from the node N1 to the node N2, the node N1 chooses the number NBR of pseudo nodes, such that

$$(NBR - 1) \cdot VMAX < OMP \le NBR \cdot VMAX .$$

For a sequence of NBR pseudo nodes, the corresponding metrics of the first NBR-1 links, which connect the first NBR-1 pseudo nodes with their next nodes, are set equal to the maximum metric value VMAX. The link metric of the last one of the NBR pseudo nodes, which is located furthest away from the node N 1, is set to a value within the range 1 to VMAX, such that the overall metric of the tunnel path exceeds the overall metric of the path of intermediate network nodes. By this, the number NBR of generated pseudo nodes and the number of generated link state messages is minimized.

It may be the case, that after a generation of a number NBR of pseudo nodes by the node N1, the node N1 detects a change in the topology of the network and rebuilds its routing table for the CLNP network protocol. During the rebuilding the node N1 may determine a changed overall metric OMPC of the path of intermediate nodes NC1, NC2. For example, the changed overall metric OMPC is smaller than a previously determined overall metric OMB. In this case, the node N1 determines the new number NEWNBR of minimum necessary pseudo nodes, such that

$$(NEWNBR - 1) \cdot VMAX < OMPC \le NEWNBR \cdot VMAX .$$

In the case, that the new number NEWNBR of minimum necessary pseudo nodes is smaller than the previously advertised number NBR of advertised pseudo nodes, then the node N1 removes the difference number DIFF of pseudo nodes

$$DIFF = NBR - NEWNBR$$

from the network topology. This removal of the difference number DIFF of pseudo nodes is carried out by the node N1, by removing these nodes from the lists of adjacent nodes advertised in the link state messages of the remaining pseudo nodes, and by abandoning sending link stale messages advertising the previously generated pseudo nodes, which are to be removed. Other network nodes, that in the past received link state messages advertising the previously generated pseudo nodes, consider these link state messages only until the lifetime indicated in these link state messages has elapsed. After the elapse of the lifetime, these other nodes will remove the previously but now no more advertised pseudo nodes from their database and update their routing tables without taking into account these removed pseudo nodes. Thus, the abandonment of the sending of the link state messages advertising pseudo nodes that are to be removed causes after some time all other nodes to remove these pseudo nodes from their considered network topology database.

Alternatively, the node N1 removes the difference number DIFF of pseudo nodes, by removing these nodes from the lists of adjacent nodes advertised in the link state messages of the remaining pseudo nodes, and by sending further link state messages advertising the pseudo nodes that are to be removed. These further link state messages contain an indicated lifetime of the value zero. Other network nodes receiving these link state messages will then analyze the indicated lifetime, remove the pseudo nodes advertised by these messages from their database and rebuild their routing tables without taking these pseudo nodes into account. Thus, a sending of such further link state messages with a lifetime value equal to zero causes the other nodes receiving these further link state messages to remove pseudo nodes instantly from their database, instead of removing these pseudo nodes not until the lifetime of the previous link state messages has elapsed.

The link metrics connecting the new number NEWNBR of pseudo nodes with their next nodes are chosen and advertised by the node N1, such that the overall metric of the tunnel path is equal to or greater than the overall metric of the path of intermediate nodes,

Figure 4 shows the network nodes N1, N2, NC1, NC2 as well as the links L2, L3 and L4, as previously described with respect to the Figure 1, 2 and 3. The metrics of the links L2 and L3 are of the value 10 in the transmission direction from the node N1 to the node N2. The metric of the link L4 is of the value 63 in the transmission direction from the node N1 to the node N2.

Furthermore, a network node N3 is shown, which supports the IP protocol and the CLNP protocol. The node N3 is connected via a link L10 to the node NC1. The metric of the link L10 in the transmission direction from the node NC1 to the node N3 is of the value 10.

The node N1 provides a first tunnel path from itself to the node N2.

The node N1 advertises two pseudo network nodes PN1 and PN1', which support only the IP protocol, A link L1' connects the node N1 with the pseudo node PN1, while a link L2' connects the pseudo nodes PN1 and PN1', A link L3' connects the pseudo node PN1' with the node N2. The pseudo nodes PN1, PN1' are advertised by the node N1 by sending link state messages, as it has been described in detail above.

The node N1 advertises the pseudo nodes PN1, PN1' as a sequence of pseudo nodes located between the nodes N1 and N2. The overall metric of the path of intermediate nodes connecting the nodes N1 and N2 is the sum of the metrics of the links L2, L3, L4. This overall metric is of the value 83. Therefore, the node N1 chooses the metric of the link L2' to the value 63, and it chooses the metric of the link L3' to the value 21. The node N1 chooses the metric of the link L1' to the value zero. Thus, the overall metric of the tunnel path between the nodes N1 and N2 has the value 84, which is greater than the value 83 of the path of intermediate nodes.

Furthermore, the node N1 provides a further tunnel path from itself to the node N3.

The overall metric of the path of intermediate nodes NC1 connecting the node N1 with the node N3 is the sum of the metrics of the links L2 and L10. This overall metric has the value 20.

The node N1 has to advertise the further tunnel path between itself and the node N3. Instead of using a separate pseudo node representing this tunnel connection, the node N1 uses the pseudo node PN1 of the first tunnel path, for advertising the further tunnel path to the node N3. The node N1 does so, by advertising the pseudo node PN1 as a node that is located on the first tunnel path between the nodes N1 and N2, and as a node that is located on the further tunnel path between the nodes N1 and N3. The pseudo node PN1 is advertised as being connected to the node N3 via a link, which in this example is the link L4. By using the same pseudo node PN1 on both tunnel paths, the number of pseudo nodes necessary for advertising multiple tunnel paths is reduced. The node N1 chooses the metric of the link L4' to the value 21. By doing so, the metric of the link L4' is chosen such that the overall metric of the further tunnel path is equal to or greater than the overall metric of the path of intermediate nodes NC1 connecting the nodes N1, N3 on a shortest path.

The node N1 advertises itself by one or more link state messages. These messages contain as the metric of the link L1', connecting the node N1 and the node PN1 used on multiple tunnel paths, the value zero. This is of advantage, since by keeping the metric of the link L1' at the value zero, the overall metric of the further tunnel path connecting the nodes N and N3 is determined only by the metric of the link L4'. Also, the overall metric of the first tunnel path connecting the nodes N1 and N2 is determined only by the metrics of the links L2' and L3'. Thus, by choosing the metric of the link L1' to the value zero, the node N1 retrains from introducing a bias to the overall metrics of the tunnel paths. Therefore, it is possible to use one pseudo node PN1 on multiple tunnel paths, while the overall metrics of these tunnel paths may still be within a range starting with the value zero, instead of starting with the value of the metric of the link L1'. This allows a greater flexibility for choosing an overall metric of a tunnel path.

In the case, that the tunnel path between the node N1 and the node N3 is terminated, the pseudo node PN1 advertising this tunnel path may not be removed, since this pseudo node PN1 is also used to advertise the tunnel path between the node N1 and the node N2. Therefore, before removing a pseudo node PN1, previously advertising a now terminated tunnel path between two nodes N1, N3, from the network N, the node N1 has to check whether this pseudo node is used for advertising another tunnel path. In the affirmative, the pseudo node PN1 is not removed from the network topology of the network N, while in the negative the pseudo node PN1 is removed from the network topology of the network N.

In the case, that the new number NEWNBR of minimum necessary pseudo nodes is greater than a number NBR of previously advertised number pseudo nodes, then the node N1 adds the difference number DIFF of pseudo nodes

$$DIFF = NEWNBR - NBR$$

to the network topology, This addition of the difference number DIFF of pseudo nodes is carried out by the node N1, by adding these pseudo nodes in the lists of adjacent nodes advertised in the link state messages of the chain of pseudo nodes, and by furthermore sending link state messages advertising the new pseudo nodes.

The link metrics of the links connecting the new number NEWNBR of pseudo nodes with their next nodes are chosen and advertised by the node N1, such that the overall metric of the tunnel path is equal to or greater than the overall metric of the path of intermediate nodes.

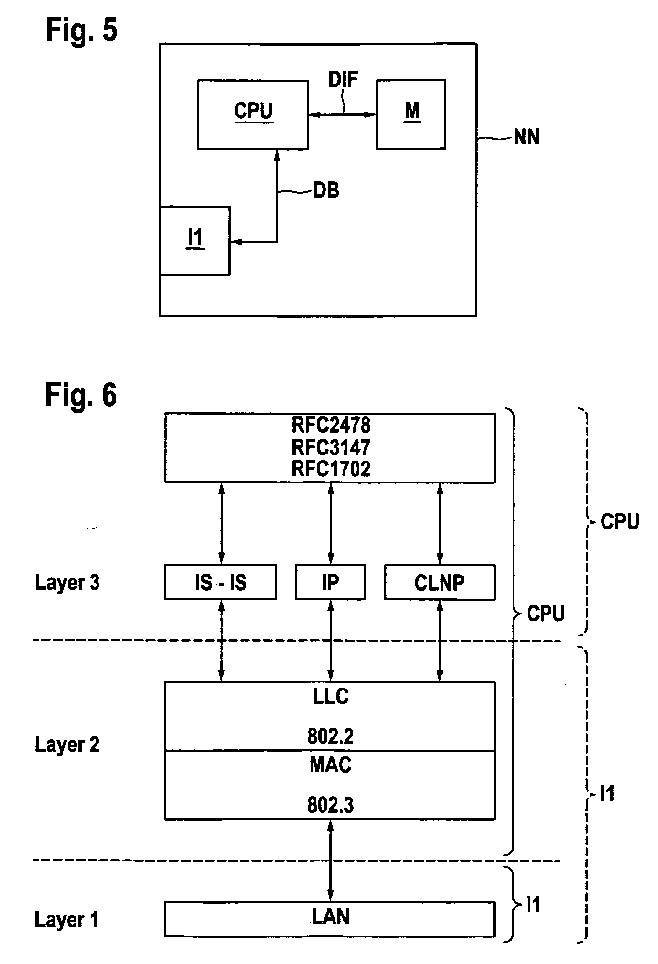

Fig. 5 shows a network node NN according to an embodiment, The network node NN contains a processor CPU and a memory M. The processor CPU and the memory M are connected via a data interface DIF. The network node NN contains an interface 11 for receiving and sending data packets as well as link state messages. The processor CPU and the memory M form the control means of the network node NN.

The control means of the network node support the IP and the CLNP network protocol. The network node NN is adapted to advertise itself to other network nodes, by sending link state messages as previously described. Furthermore, the control means are adapted to exchange hondshake messages as previously described above.

Within the memory M, the network node NN stores information such as routing information, which the network node receives from other network nodes. Furthermore, the processor CPU generates from the routing information stored within the memory M different routing tables for different network protocols, which are supported by the network node NN.

The control means are configured to encapsulate data packets of the IP network protocol into data packets of the CLNP network protocol for transmitting the IP data packets via the CLNP data packets to a second network node not shown in Fig. 5. By doing so, the node NN provides a tunnel path for transmitting IP data packets from the node NN to the second node.

The number of processors contained in the network node NN is not limited to one processor, there may be multiple processors working in parallel and performing different types of protocols within the network node. Furthermore, more than one memory may be contained in the network node. Further still, the number of interfaces via which the network node is connected to further network nodes is not limited to one but may be targer.

Furthermore, the control means of the network node are adapted to advertise to other network nodes a pseudo network node as a node, which supports the IP protocol but not the CLNP protocol. The advertisement of the pseudo network node is given by the processor CPU of the network node NN being adapted to generate and send via the interface 11 to other network nodes link state messages as previously describes above.

By running a Shortest Path Algorithm for generating a CLNP routing table, the processor CPU in conjunction with the memory M determines an overall metric of a path of intermediate network nodes, leading from the network node NN to that second network node, to which the encapsulated IP data packets are sent within CLNP data pockets. The CPU chooses a metric indicated in the link state message advertising the pseudo network node such, that an overall metric of the tunnel path is equal to or greater than an overall metric the path of intermediate nodes.

Fig. 6 shows different protocols of different protocol layers carried out within the network node NN. At the Layer 3, also called Network Protocol Layer, the IS- IS protocol, the IP protocol and the CLNP protocol are carried out. These Layer 3 protocols interact with Layer 2 protocols, which are also called protocols of the Data Link Layer. The highest sublayer of the Data Link Layer is the Logical Link Control protocol according to the standard "IEEE Std 802.2- 1998, Information processing systems- Local area networks- Part 2: logical link control, 31 Dec 1989, E- ISBN: 0- 7381- 4601- 3", briefly called LLC. This protocol LLC directly interacts with the protocols of the network protocol layer. Directly below the protocol LLC, there is placed the sublayer of Media Access Control according to the standard "IEEE Std 802.3- 2008, IEEE Standard for Information technology-- Telecommunications and information exchange between systems-- Local and metropolitan area networks-- Specific requirements Part 3: Carrier Sense Multiple Access with Collision Detection (CSMA/CD) Access Method and Physical Layer Specifications- Section Five, 2008, ISBN: 973- 07381- 5797- 9", briefly called MAC. This lower sublayer of the Data Link Layer interacts with the protocol of the Layer 1, which is also called the Physical Layer. At this Physical Layer, a protocol according to the Local Area Network LAN is running, which may be a protocol according to the well known protocol 10base- T. The protocols of the Layer 2, which are the LLC protocol and the MAC protocol, together with the LAN protocol of the Layer 1 are well known as the technology called Ethernet.

Fig. 6 furthermore illustrates, indicated by the solid line brackets, which types of protocols are carried out at which hardware within the network node NN.

The processor CPU is adapted to run protocols of the Layer 3 and the Layer 2. Via the data bus DB, the processor CPU exchanges signets, such as Ethernet frames, with the interface I1. The interface I1 is adapted to run the protocols of the Physical Layer.

The processor CPU generates a link state message for advertising the pseudo network node as previously described above. This link state message is then sent via the IS-IS protocol from the Layer 3 via the Layer 2 to the Layer 1, from where it is transmitted by the interface I1 to the other network nodes of the network.

The different protocols depicted in Fig. 6 running on the processor CPU do not have to run as one single software, but may run on the processor CPU as different processing threads. Furthermore, the different protocols of the Layer 3 and the Layer 2 may run as different processing threads on different CPUs, which are connected via the data bus DB.

The memory M is used by the processor CPU for storing the link state database containing the information from the jink state messages received from other network nodes, furthermore, the processor CPU runs the algorithm Shortest Path First for determining for each network protocol supported by the network node NN a different routing table, which then is stored in the memory M. The memory M does not necessarily have to be one single memory but may be made up of different memory elements or memory storage devices to which the processor CPU is connected via a data-interface DIF.

According to this embodiment, indicated by the solid line brackets, the processor CPU is adapted to run protocols of the Layer 3 and the Layer 2. The interface IF1 is adapted to run protocols of the Layer 1.

According to an alternative solution, also indicated in Figure 6 by the dashed line brackets, the processor CPU is adapted to run protocols of the Layer 3. The interface IF1 is adapted to run protocols of the Layer 2 and the Layer 1.

The implementation of protocols within the interface IF1 may be done as hardware or as software running on processors comprised within the hardware of the interface IF1.

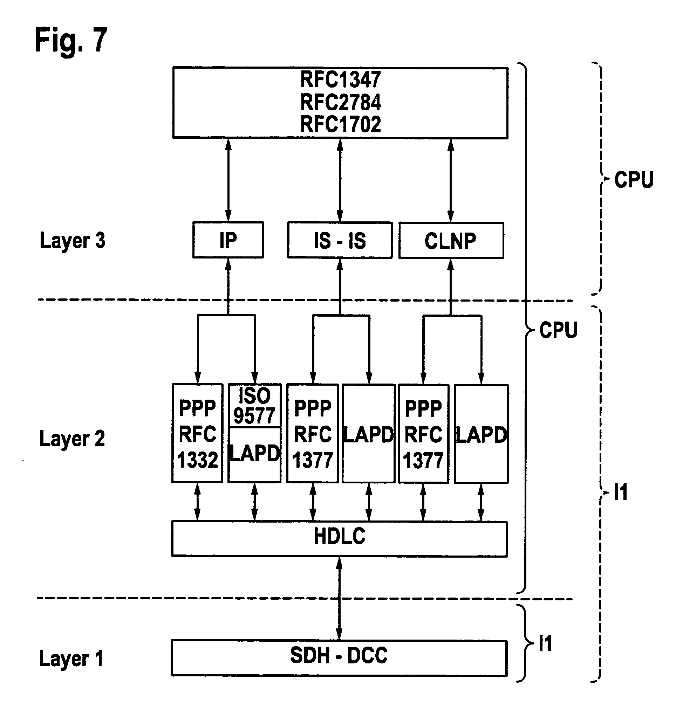

An alternative solution of carrying out alternative protocols at the network node NN is shown in Figure 7. In this embodiment, the structure of the network node NN is in general the some as depicted in Fig. 5. Figure 7 shows the different protocols which are carried out by different parts of the hardware of the network node NN.

At the Layer 3, the network protocols IP and CLNP are carried out as well as the routing protocol IS-IS.

At the Layer 2, different protocols are carried out for different types of messages or data packets received from the Layer 3. Data packets originating from the CLNP protocol are passed on to either the Link Access Procedure for D- Channel LAPD as defined in the paper "ITU-T Recommendation Q.921 (09/97), Digital Subscriber Signaling System No. 1 - Data Link Layer", briefly called Q.921, or to the Point-to-Point Protocol PPP as defined in the paper "Network Working Group, RFC 1377 - The PPP OSI Network Layer Control Protocol (OSINLCP), November 1992", briefly called RFC 1377. From either of these two protocols at the Layer 2, the resulting data is passed on to the next lower sub-layer of the Layer 2, which carries out framing of the data according to the protocol of High-Level Data Link Control HDLC.

At the Layer 1, data which is received from the Layer 2 is transmitted by means of a protocol supporting data transfer via the Data Communication Channel

DCC of a network according to Synchronous Digital Hierarchy SDH, which is indicated as SDH-DCC.

Data packets originating from the IP protocol at Layer 3 are passed on to the Layer 2, namely to either the Point- to- Point Protocol PPP according to the standard "Network Working Group, RFC 1322- A Unified Approach to InterDomain Routing, May 1992", briefly called RFC 1332, or to an LAPD protocol as defined by the standard "ISO/IEC 9577, Information Technology- Protocol Identification in the Network Layer, Fourth Edition, 1999- 12- 15", briefly called ISO 9577. From either of these Layer 2 protocols, the originating data is passed on to the protocol of HDLC, which handles the data from the Point- to- Point Protocol PPP or the LAPD protocol as previously describe,

Routing messages originating at Layer 3 from the IS-IS protocol are passed on to either the LAPD protocol or to a Point-to-Point protocol according to the standard RFC 1377. The data originating from these Layer 2 protocols is then passed on to the HDLC protocol, which handles the data as described above.

The HDLC protocol passes the data on to the next lower layer, which is the Layer 1, where the data is then transmitted via the Data Communication Channel DCC of the SDH network to other network nodes.

As indicated in Fig. 7, the processor CPU is adapted to run the protocols of the Layer 3 and the Layer 2. Furthermore, the interface 11 is adapted to run the protocol of the Layer 1.

According to an alternative solution, also indicated in Figure 7 by the dashed line brackets, the processor CPU is adapted to carry out the protocols at the Layer 3, while the interface IF1 is adapted to carry out the protocols at Layer 2 and Layer 1.

The implementation of protocol within the interface IF1 may be done as hardware or as software running on processors comprised within the hardware of the interface IF1.

The functions of the various elements shown in the Figures 5, 6 and 7, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figure 5 ore conceptual only. Their function may be carried out through the operation of program logic, through dedicated logic, through the interaction of program control and dedicated logic, or even manually, the particular technique being selectable by the implementer as more specifically understood from the context.

**Claims**

1. Method of exchanging routing information between network nodes in a packet switched network (N), wherein said network nodes (N1) send to other network nodes link state messages indicating

   - themselves (N1)
   - network nodes (NA1, NC1) adjacent to themselves, and
   - metrics (ML-N1) of respective links (L1, L2) connecting themselves (N1) to their respective adjacent network nodes (NA1, NC1),

   wherein a first and a second network node (N1, N2), each supporting at least a first, IP, and a second network protocol, CLNP, are connected by a first path containing at least one intermediate network node (NC1, NC2) not supporting said first network protocol IP,
   comprising

   - providing a tunnel path between said first network node (N1) and said second network node (N2), by encapsulating data packets of said first network protocol, IP, into data packets of said second network protocol, CLNP,

   **characterized by**

   - advertising said tunnel path, by sending a link state message advertising a pseudo network node (PN1)

     • as a network node located between said first (N1) and said second network node (N2), and
     • as a network node supporting said first, IP, but not said second network protocol, CLNP, and

   - choosing a metric (M2-PN1) indicated in said link state message, such that an overall metric of said tunnel path is equal to or greater than an overall metric of said first path.

2. Method according to claim 1, comprising furthermore

   - monitoring said first path,
   - detecting a change of said first path and said overall metric of said path,
   - adjusting said metric (M2-PN1) for adjusting said overall metric of said tunnel path, such that it is equal to or greater than the changed overall metric of said first path.

**3.** Method according to claim 1 or 2,
comprising furthermore
advertising said tunnel path, by sending link state messages advertising a sequence of pseudo network nodes (PN1, PN1')

  • as pseudo network nodes located between said first (N1) and said second network node (N2), and
  • as pseudo network nodes supporting said first, IP, but not said second network protocol, CLNP, and
  • choosing metrics indicated in said link state messages, such that said overall metric of said tunnel path formed by said sequence of pseudo network nodes is equal to or greater than said overall metric of said first path.

**4.** Method according to claim 3,
wherein a number of said pseudo network nodes (PN1, PN1') of said sequence is chosen to a minimum number of pseudo network nodes necessary for setting said overall metric of said tunnel path to a value equal to or greater than a value of said overall metric of said first path.

**5.** Method according to claim 4,
comprising furthermore

  - monitoring said first path,
  - detecting a change of said first path and said overall metric of said path,
  - adjusting said metric, for adjusting said overall metric of said tunnel path, such that it is equal to or greater than the changed overall metric of said first path, by adding to said network (N1) or removing from said network (N1) a number of pseudo network nodes of said sequence of pseudo network nodes.

**6.** Method according to claim 1,
wherein said metric (M2- PN1) indicates a transmission cost along a link from said pseudo node (PN1) to said second node (N2),
wherein a further metric (M1- PN1) is indicated in said link state message, wherein said further metric (M1- PN1) indicates a transmission cost along a link from said pseudo network node (PN 1) to said first node (N1), and
wherein said further metric (M1- PN1) is chosen to a value equal to zero.

**7.** Method according to claim 1,
wherein said first network node (N1) is connected to a third network node (N3) by a second path containing at least one intermediate network node (NC1) not supporting said first network protocol,
wherein said third network node (N3) supports at least said first, IP, and said second network protocol, CLNP, comprising furthermore,

  - providing a further tunnel path between said first network node (N1) and said third network node (N3),
  - advertising said further tunnel path, by indicating in said link state message said pseudo network node (PN1)

    • as a network node located between said first network node (N1), said second network node (N2) and said third network node (N3), and
    • as a network node supporting said first, IP, but not said second network protocol, CLNP, and

  - choosing a metric indicated in said link state message, such that an overall metric of said further tunnel path is equal to or greater than an overall metric of said second path.

**8.** Network node (NN) for exchanging data packets in a packet switched network,
wherein said network node (NN) comprises control means (CPU, M) that are adapted to support at least a first, IP, and a second, CLNP, network protocol,
wherein said control means (CPU, M) are adapted to advertise said network node (NN) to other network nodes, by generating and sending to said other network nodes at least one link state message containing

  - a network node address (N1) of said network node (NN),
  - an adjacency list (AL-N1) indicating network nodes adjacent to said network node (NN), and
  - a list of metrics of respective links (ML-N1) connecting said network node (NN) to the adjacent network nodes,

and wherein in said control means (M, CPU) are configured

- to encapsulate first data packets of a first network protocol, IP, into second data packets of a second network protocol, CLNP, for transmitting said first data packets via said second data packets to a second network node,

**characterized, in that** said control means are configured

- to advertise a pseudo network node to said other network nodes, by generating and sending to said other network nodes link state messages indicating said pseudo network node as a network node supporting said first network protocol, IP, but not said second network protocol, CLNP, and by indicating said first network node as a network node located between said first network node (N1) and said second network node (N2), and
- to choose a metric indicated in said link state message, such that an overall metric of said tunnel path is equal to or greater than an overall metric of said first path.

**Patentansprüche**

1. Verfahren zum Austauschen von Routing-Informationen zwischen Netzwerkknoten in einem paketvermittelten Netzwerk (N),
wobei die besagten Netzwerkknoten (N1) Verbindungszustandsnachrichten an andere Netzwerkknoten senden, welche angeben:

   - Sich selbst (N1)
   - Netzwerkknoten (NA1, NC1), welche mit ihnen benachbart sind, und
   - Metriken (ML-N1) von entsprechenden Verbindungen (L1, L2), welche sie selbst (N1) mit ihren entsprechenden benachbarten Netzwerkknoten (NA1, NC1) verbinden,

   wobei ein erster und ein zweiter Netzwerkknoten (N1, N2), welche jeweils mindestens ein erstes, IP, und ein zweites Netzwerkprotokoll, CLNP, unterstützen, über einen ersten Pfad mit mindestens einem Zwischen-Netzwerkknoten (NC1, NC2), welcher das erste Netzwerkprotokoll, IP, nicht unterstützt, verbunden sind,
   umfassend:

   - Bereitstellen eines Tunnelpfads zwischen dem besagten ersten Netzwerkknoten (N1) und dem besagten zweiten Netzwerkknoten (N2) durch Einkapseln von Datenpaketen des besagten ersten Netzwerkprotokolls, IP, in Datenpakete des besagten zweiten Netzwerkprotokolls, CLNP,

   **gekennzeichnet durch**:

   - Anzeigen des besagten Tunnelpfads **durch** Senden einer Verbindungszustandsnachricht, welche einen Pseudo-Netzwerkknoten (PN1)

      • als einen zwischen dem besagten ersten (N1) und dem besagten zweiten Netzwerkknoten (N2) angeordneten Netzwerkknoten, und
      • als einen Netzwerkknoten, welcher das besagte erste, IP, jedoch nicht das besagte zweite Netzwerkprotokoll, CLNP, unterstützt, anzeigt, und

   - Auswählen einer in der besagten Verbindungszustandsnachricht angegebenen Metrik (M2-PN1), derart, dass eine Gesamtmetrik des besagten Tunnelpfads gleich einer oder größer als eine Gesamtmetrik des besagten ersten Pfads ist.

2. Verfahren nach Anspruch 1,
weiterhin umfassend:

   - Überwachen des besagten ersten Pfads,
   - Erkennen einer Veränderung des besagten ersten Pfads und der besagten Gesamtmetrik des besagten Pfads,
   - Anpassen der besagten Metrik (M2-PN1), um die besagte Gesamtmetrik des besagten Tunnelpfads derart anzupassen, dass sie gleich der oder größer als die besagte veränderte(n) Gesamtmetrik des besagten ersten Pfads ist.

3. Verfahren nach Anspruch 1 oder 2,

weiterhin umfassend:

Anzeigen des besagten Tunnelpfads durch Senden von Verbindungszustandsnachrichten, welche eine Folge von Pseudo-Netzwerkknoten (PN1, PN1')

• als zwischen dem besagten ersten (N1) und dem besagten zweiten Netzwerkknoten (N2) angeordnete Pseudo-Netzwerkknoten, und
• als Pseudo-Netzwerkknoten, welche das besagte erste, IP, jedoch nicht das besagte zweite Netzwerkprotokoll, CLNP, unterstützen, anzeigen, und
• Auswählen von in den besagten Verbindungszustandsnachrichten angegebenen Metriken, derart, dass die besagte Gesamtmetrik des besagten durch die besagte Folge von Pseudo-Netzwerkknoten gebildeten Tunnelpfads gleich der oder größer als die besagte Gesamtmetrik des besagten ersten Pfads ist.

4. Verfahren nach Anspruch 3,
wobei eine Anzahl der besagten Pseudo-Netzwerkknoten (PN1, PN1') der besagten Folge als eine für das Einstellen der besagten Gesamtmetrik des besagten Tunnelpfads auf einen Wert, welcher gleich einem oder größer als ein Wert der besagten Gesamtmetrik des besagten ersten Pfads ist, erforderliche Mindestanzahl von Pseudo-Netzwerkknoten gewählt wird.

5. Verfahren nach Anspruch 4, weiterhin umfassend:

- Überwachen des besagten ersten Pfads,
- Erkennen einer Veränderung des besagten ersten Pfads und der besagten Gesamtmetrik des besagten Pfads,
- Anpassen der besagten Metrik, um die besagte Gesamtmetrik des besagten Tunnelpfads derart anzupassen, dass sie gleich der oder größer als die besagte veränderte(n) Gesamtmetrik des besagten ersten Pfads ist, durch Hinzufügen zu dem besagten Netzwerk (N1) oder Entfernen aus dem besagten Netzwerk (N1), einer Anzahl von Pseudo-Netzwerkknoten der besagten Folge von Pseudo-Netzwerkknoten.

6. Verfahren nach Anspruch 1,
wobei die besagte Metrik (M2-PN1) die Kosten für die Übertragung einer Verbindung von dem besagten Pseudo-Knoten (PN1) zu dem besagten zweiten Knoten (N2) angibt, wobei in der besagten Verbindungszustandsnachrichte eine weitere Metrik (M1-PN1) angegeben wird,
wobei die besagte weitere Metrik (M1-PN1) die Kosten für die Übertragung entlang einer Verbindung von dem besagten Pseudo-Netzwerkknoten (PN1) zu dem besagten ersten Knoten (N1) angibt, und
wobei die besagte weitere Metrik (M1-PN1) mit einem Wert von gleich Null gewählt wird.

7. Verfahren nach Anspruch 1,
wobei der besagte erste Netzwerkknoten (N1) über einen zweiten Pfad mit mindestens einem Zwischen-Netzwerkknoten (NC1), welcher das besagte erste Netzwerkprotokoll nicht unterstützt, mit einem dritten Netzwerkknoten (N3) verbunden ist,
wobei der besagte dritte Netzwerkknoten (N3) mindestens das besagte erste, IP, und das besagte zweite Netzwerkprotokoll, CLNP, unterstützt,
weiterhin umfassend:

- Bereitstellen eines weiteren Tunnelpfads zwischen dem besagten ersten Netzwerkknoten (N1) und dem besagten dritten Netzwerkknoten (N3),
- Anzeigen des besagten weiteren Tunnelpfads durch Anzeigen des besagten Pseudo-Netzwerkknotens (PN1) in der besagten Verbindungszustandsnachricht

• als einen zwischen dem besagten ersten (N1) und dem besagten zweiten Netzwerkknoten (N2) und dem besagten dritten Netzwerkknoten (N3) angeordneten Netzwerkknotens, und
• als einen Netzwerkknoten, welcher das besagte erste, IP, jedoch nicht das besagte zweite Netzwerkprotokoll, CLNP, unterstützt, und

- Auswählen einer in der besagten Verbindungszustandsnachricht angegebenen Metrik, derart, dass eine Gesamtmetrik des besagten Tunnelpfads gleich einer oder größer als eine Gesamtmetrik des besagten zweiten Pfads ist.

8. Netzwerkknoten (NN) zum Austauschen von Datenpaketen in einem paketvermittelten Netzwerk, wobei der besagte Netzwerkknoten (NN) Steuermittel (CPU, M) umfasst, welche für die Unterstützung mindestens eines ersten, IP, und eines zweiten, CLNP, Netzwerkprotokolls ausgelegt sind, wobei die besagten Steuermittel (CPU, M) dazu ausgelegt sind, anderen Netzwerkknoten den besagten Netzwerkknoten (NN) anzuzeigen, indem sie mindestens eine Verbindungszustandsnachricht erzeugen und an die besagten anderen Netzwerkknoten senden, welche enthält:

  - Eine Netzwerkknoten-Adresse (N1) des besagten Netzwerkknotens (NN),
  - eine Nachbarschaftsliste (AL-N1), welche mit dem besagten Netzwerkknoten (NN) benachbarte Netzwerkknoten angibt, und
  - eine Liste von Metriken von entsprechenden Verbindungen (ML-N1), welche den besagten Netzwerkknoten (NN) mit den benachbarten Netzwerkknoten verbinden,

  und wobei die besagten Steuermittel (M, CPU) konfiguriert sind für

  - das Einkapseln von ersten Datenpaketen eines ersten Netzwerkprotokolls, IP, in zweite Datenpakete eines zweiten Netzwerkprotokolls, CLNP, zur Übertragung der besagten ersten Datenpakete über die besagten zweiten Datenpakete an einen zweiten Netzwerkknoten,

  **dadurch gekennzeichnet, dass** die besagten Steuermittel konfiguriert sind für

  - das Anzeigen eines Pseudo-Netzwerkknotens an die besagten anderen Netzwerkknoten durch Erzeugen und Senden an die besagten anderen Netzwerkknoten von Verbindungszustandsnachrichten, welche den besagten Pseudo-Netzwerkknoten als einen Netzwerkknoten, welcher das besagte erste Netzwerkprotokoll, IP, jedoch nicht das besagte zweite Netzwerkprotokoll, CLNP, unterstützt, angeben, und durch Angeben des besagten ersten Netzwerkknotens als einen zwischen dem besagten ersten Netzwerkknoten (N1) und dem besagten zweiten Netzwerkknoten (N2) angeordneten Netzwerkknoten, und
  - das Auswählen einer in der besagten Verbindungszustandsnachricht angegebenen Metrik, derart, dass eine Gesamtmetrik des besagten Tunnelpfads gleich einer oder größer als eine Gesamtmetrik des besagten zweiten Pfads ist.


## Revendications

1. Procédé d'échange d'informations de routage entre des noeuds de réseau dans un réseau de commutation de paquets (N), dans lequel lesdits noeuds de réseau (N1) envoient à d'autres noeuds de réseau des messages d'état de liaison indiquant

  - eux-mêmes (N1)
  - des noeuds de réseau (NA1, NC1) adjacents à eux-mêmes, et
  - des mesures (ML-N1) de liaisons respectives (L1, L2) connectant ceux-ci (N1) à leurs noeuds de réseau adjacents respectifs (NA1, NC1),

  dans lequel un premier et un deuxième noeuds de réseau (N1, N2), chacun prenant en charge au moins un premier protocole de réseau, IP, et un deuxième protocole de réseau, CLNP, sont connectés au moyen d'un premier chemin contenant au moins un noeud de réseau intermédiaire (NC1, NC2) ne prenant pas en charge ledit premier protocole de réseau, IP, comprenant l'étape suivante

  - fournir un chemin tunnel entre ledit premier noeud de réseau (N1) et ledit deuxième noeud de réseau (N2), en encapsulant des paquets de données dudit premier protocole de réseau, IP, dans des paquets de données dudit deuxième protocole de réseau, CLNP,

  **caractérisé par** les étapes suivantes

  - annoncer ledit chemin tunnel, en envoyant un message d'état de liaison annonçant un pseudo noeud de réseau (PN1)

• comme un noeud de réseau situé entre ledit premier noeud de réseau (N1) et ledit deuxième noeud de réseau (N2), et

• comme un noeud de réseau prenant en charge ledit premier protocole de réseau, IP, mais pas ledit deuxième protocole de réseau, CLNP, et

- choisir une mesure (M2-PN1) indiquée dans ledit message d'état de liaison, de sorte qu'une mesure globale dudit chemin tunnel soit supérieure ou égale à une mesure globale dudit premier chemin.

**2.** Procédé selon la revendication 1,
comprenant en outre les étapes suivantes

- surveiller ledit premier chemin,
- détecter une modification dudit premier chemin et de ladite mesure globale dudit chemin,
- régler ladite mesure (M2-PN1) pour régler ladite mesure globale dudit chemin tunnel, de sorte qu'elle soit supérieure ou égale à la mesure globale modifiée dudit premier chemin.

**3.** Procédé selon la revendication 1 ou 2,
comprenant en outre les étapes suivantes
annoncer ledit chemin tunnel, en envoyant des messages d'état de liaison annonçant une séquence de pseudo noeuds de réseau (PN1, PN1')

• comme pseudo noeuds de réseau situés entre ledit premier noeud de réseau (N1) et ledit deuxième noeud de réseau (N2), et

• comme pseudo noeuds de réseau prenant en charge ledit premier protocole de réseau, IP, mais pas ledit deuxième protocole de réseau, CLNP, et

• choisir des mesures indiquées dans lesdits messages d'état de liaison, de sorte que ladite mesure globale dudit chemin tunnel, formé par ladite séquence de pseudo noeuds de réseau, soit supérieure ou égale à ladite mesure globale dudit premier chemin.

**4.** Procédé selon la revendication 3,
dans lequel un nombre desdits pseudo noeuds de réseau (PN1, PN1') de ladite séquence est choisi comme étant un nombre minimum de pseudo noeuds de réseau nécessaires pour régler ladite mesure globale dudit chemin tunnel sur une valeur supérieure ou égale à une valeur de ladite mesure globale dudit premier chemin.

**5.** Procédé selon la revendication 4,
comprenant en outre les étapes suivantes

- surveiller ledit premier chemin,
- détecter une modification dudit premier chemin et de ladite mesure globale dudit chemin,
- régler ladite mesure, pour régler ladite mesure globale dudit chemin tunnel, de sorte qu'elle soit supérieure ou égale à la mesure globale modifiée dudit premier chemin, en ajoutant audit réseau (N1) ou en retirant dudit réseau (N1) un nombre de pseudo noeuds de réseau de ladite séquence de pseudo noeuds de réseau.

**6.** Procédé selon la revendication 1,
dans lequel ladite mesure (M2-PN1) indique un coût de transmission le long d'une liaison entre ledit pseudo noeud (PN1) et ledit deuxième noeud (N2),
dans lequel une autre mesure (M1-PN1) est indiquée dans ledit message d'état de liaison, ladite autre mesure (M1-PN1) indiquant un coût de transmission le long d'une liaison entre ledit pseudo noeud de réseau (PN1) et ledit premier noeud (N1), et
dans lequel ladite autre mesure (M1-PN1), d'une valeur égale à zéro, est choisie.

**7.** Procédé selon la revendication 1,
dans lequel ledit premier noeud de réseau (N1) est connecté à un troisième noeud de réseau (N3) au moyen d'un deuxième chemin contenant au moins un noeud de réseau intermédiaire (NC1) ne prenant pas en charge ledit premier protocole de réseau,
dans lequel ledit troisième noeud de réseau (N3) prend en charge au moins ledit premier protocole, IP, et ledit deuxième protocole de réseau, CLNP,
comprenant en outre les étapes suivantes,

- fournir un autre chemin tunnel entre ledit premier noeud de réseau (N1) et ledit troisième noeud de réseau (N3),
- annoncer ledit autre chemin tunnel, en indiquant dans ledit message d'état de liaison ledit pseudo noeud de réseau (PN1)

  • comme un noeud de réseau situé entre ledit premier noeud de réseau (N1), ledit deuxième noeud de réseau (N2) et ledit troisième noeud de réseau (N3), et
  • comme un noeud de réseau prenant en charge ledit premier protocole de réseau, IP, mais pas ledit deuxième protocole de réseau, CLNP, et

- choisir une mesure indiquée dans ledit message d'état de liaison, de sorte qu'une mesure globale dudit autre chemin tunnel soit supérieure ou égale à une mesure globale dudit deuxième chemin.

8.  Noeud de réseau (NN) pour échanger des paquets de données dans un réseau de commutation de paquets, dans lequel ledit noeud de réseau (NN) comprend des moyens de commande (CPU, M) qui sont adaptés pour prendre en charge au moins un premier protocole de réseau, IP, et un deuxième protocole de réseau, CLNP, dans lequel lesdits moyens de commande (CPU, M) sont adaptés pour annoncer ledit noeud de réseau (NN) à d'autres noeuds de réseau, en générant et en envoyant auxdits autres noeuds de réseau au moins un message d'état de liaison contenant

  - une adresse de noeud de réseau (N1) dudit noeud de réseau (NN),
  - une liste d'adjacence (AL-N1) indiquant des noeuds de réseau adjacents audit noeud de réseau (NN), et
  - une liste de mesures de liaisons respectives (ML-N1) connectant ledit noeud de réseau (NN) aux noeuds de réseau adjacents,

  et dans lequel lesdits moyens de commandes (M, CPU) sont configurés

  - pour encapsuler des premiers paquets de données d'un premier protocole de réseau, IP, dans des deuxièmes paquets de données d'un deuxième protocole de réseau, CLNP, pour transmettre lesdits premiers paquets de données par l'intermédiaire desdits deuxièmes paquets de données vers un deuxième noeud de réseau,

  **caractérisé en ce que** lesdits moyens de commande sont configurés

  - pour annoncer un pseudo noeud de réseau auxdits autres noeuds de réseau, en générant et en envoyant auxdits autres noeuds de réseau des messages d'état de liaison indiquant ledit pseudo noeud de réseau comme un noeud de réseau prenant en charge ledit premier protocole de réseau, IP, mais pas ledit deuxième protocole de réseau, CLNP, et en indiquant ledit premier noeud de réseau comme un noeud de réseau situé entre ledit premier noeud de réseau (N1) et ledit deuxième noeud de réseau (N2), et
  - pour choisir une mesure indiquée dans ledit message d'état de liaison, de sorte qu'une mesure globale dudit chemin tunnel soit supérieure ou égale à une mesure globale dudit premier chemin.

# Fig. 1

EP 2 458 793 B1

# Fig. 2

**Fig. 3**

LSP-PN1'

| PN | — NA-PN1 |
| IP | — PL-PN1 |
| N1 PN2 | — AL-PN1' |

M1-PN1 — | 0 | — ML-PN1
M2-PN1 — | 26 |

LSP-PN2

| PN2 | — NA-PN2 |
| IP | — PL-PN2 |
| N2 PN1 | — AL-PN2 |

M1-PN2 — | 0 | — ML-PN2
M2-PN2 — | 21 |

IP capable network ⇩

L1   L1'

NETC

L2'

IP capable network ⇩

```
PN1
IP only
```

26

IP over CLNP Tunnel

21

```
PN2
IP only
```

L5

NETA

NA1 / CLNP & IP

10
20

N1 / CLNP & IP

0
0

5  10

NC1 / CLNP only

5  10

NC2 / CLNP only

L2

L3

10  5

N2 / CLNP & IP

0
0

10

NB1 / CLNP & IP

10

NETB

L3'   L4

L5

LSP-N1'

| N1 | — NA-N1 |
| CLNP IP | — PL-N1 |
| NA1 NC1 PN1 | — AL-N1' |

M1-N1 — | 20 |
M2-N1 — | 10 | — ML-N1'
M3-N1 — | 0 |

N

LSP-N2'

| N2 | — NA-N2 |
| CLNP IP | — PL-N2 |
| NB1 NC2 PN2 | — AL-N2' |

M1-N2 — | 10 |
M2-N2 — | 10 | — ML-N2'
M3-N2 — | 0 |

EP 2 458 793 B1

# Fig. 4

## Fig. 5

```
        DIF
CPU ←——————→  M

          DB                        NN

I1
```

## Fig. 6

```
                    RFC2478
                    RFC3147
                    RFC1702

Layer 3      IS - IS      IP      CLNP        CPU
                                          CPU

Layer 2             LLC
                    802.2
                    MAC
                    802.3                      I1

Layer 1             LAN                        I1
```

# Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1392026 A2
- EP 1275593 A1
- EP 2175692 A
- EP 2337275 A

### Non-patent literature cited in the description

- Network Working Group - Request for Comments: 1995. **ROSS W. CALLON.** Use of OSI IS-IS for Routing in TCP/IP and Dual Environments. Digital Equipment Corporation, December 1990
- *Information technology - Protocol for providing the connectionless-mode network service: Protocol specification ISO/IEC 8473-1,* 1998
- *Request For Comments 3147, Generic Routing Encapsulation over CLNS Networks,* July 2001
- Information processing systems - Local area networks - Part 2: logical link control. *IEEE Std 802.2-1998,* 31 December 1989, ISBN 0-7381-4601-3
- IEEE Standard for Information technology--Telecommunications and information exchange between systems--Local and metropolitan area networks--Specific requirements Part 3: Carrier Sense Multiple Access with Collision Detection (CSMA/CD) Access Method and Physical Layer Specifications - Section Five. *IEEE Std 802.3-2008,* 2008, ISBN 973-07381-5797-9
- ITU-T Recommendation Q.921. *Digital Subscriber Signaling System No. 1 - Data Link Layer,* September 1997
- *Network Working Group, RFC 1377 - The PPP OSI Network Layer Control Protocol (OSINLCP,* November 1992
- *Network Working Group, RFC 1322 - A Unified Approach to InterDomain Routing,* May 1992
- ISO/IEC 9577, Information Technology - Protocol Identification in the Network Layer. 15 December 1999